# EUROPÄISCHE PATENTSCHRIFT

(11) **EP 1 354 830 B1**
(45) Veröffentlichungstag und Bekanntmachung des Hinweises auf die Patenterteilung: **28.04.2004**
(21) Anmeldenummer: 02008526.2
(22) Anmeldetag: 15.04.2002
(51) Int. Cl.: B65G 39/02, B65G 39/18, B65G 21/20, H01L 21/00, B65G 39/07, F16C 13/00

(54) **Transportrollen, Niederhalter und Transportsystem für flaches Transportgut**
Conveyor roller, retainer device and conveying system for flat pieces
Rouleau de convoyeur, dispositif de maintien et système de transport pour pièces plates

(43) Veröffentlichungstag der Anmeldung: 22.10.2003
(73) Patentinhaber: Rena Sondermaschinen GmbH, 78148 Gütenbach (DE)
(72) Erfinder: Gutekunst, Jürgen, 78120 Furtwangen (DE)
(74) Vertreter: Stürken, Joachim

(56) Entgegenhaltungen:
- DE-A- 3 140 546
- DE-B- 1 256 963
- DE-C- 328 867
- US-A- 2 979 829
- US-A- 5 711 806
- US-A- 6 003 661

## Beschreibung

Die Erfindung bezieht sich auf Niederhalter zum Andrücken von im wesentlichen flachem Transportgut auf Transportrollen, sowie auf ein Transportsystem zum Transport von im wesentlichen flachem Transportgut.

### Stand der Technik

In einer Herstellungskette ist es oftmals nötig, das zu transportierende Gut an mehreren Fertigungsstationen vorbeizuführen. Dabei wird eine gewisse Strecke in einer bestimmten Geschwindigkeit zurückgelegt, unterschiedliche Temperaturen, Drücke und verschiedene Medien durchlaufen. Flaches Transportgut wird dazu bislang auf einen Werkstückträger aufgebracht oder mit einem Ketten- oder Schubantrieb befördert.

In DE 12 56 963 B und DE 31 40 546 A sind Niederhalter gemäß dem Oberbegriff des Anspruchs 1 vorgestellt, die zweiteilig aus einer Achse und einer Hülse ausgeführt sind, wobei der Innendurchmesser der Hülse größer ist als der Außendurchmesser der Achse und zwischen Achse und Hülse eine elastische Kopplung besteht.

Des weiteren ist aus US 5,711,806 ein Transportsystem zum Transport von flachem Transportgut durch chemische Bäder bekannt, das mit Transportrollen und Niederhaltern versehen ist und bei dem die Niederhalter federnd gelagert sind.

### Nachteile des Standes der Technik

Der Transport mit Werkstückträgern bietet zwar eine sehr stabile Lagerung des einzelnen Transportguts, je nach Ausführung auch eine gute Kontaktmöglichkeit von Transportgut zu dem umgebenden Medium, mit dem unter Umständen ein nasschemischer Vorgang geschieht. Jedoch ist die Bestückung der Werkstückträger sehr aufwändig und führt in einer Serienproduktion zu einem erheblichen Zeitverlust und damit zu einem unerwünschten Kostenfaktor.

Leichter bestückbar ist ein Transportsystem bei Ketten-, Schuboder Rollenantrieb. Hier wird das Transportgut in der Regel einfach aufgelegt und je nach Anwendungsfall entsprechend fixiert.

Bei einem Transport nach dem Fließbandprinzip muss an den einzelnen Verarbeitungsstationen dafür gesorgt werden, dass das Werkstück zugänglich für Bearbeitung, chemische Reaktionen, Besprühen etc. ist. Dazu muss es unter Umständen umgelagert werden, was das Verfahren umständlich macht.

Problematisch ist vor allem die hohe Bruchrate bei empfindlichen Transportgütern, wie dünnen Halbleiterwafern oder Rohlingen für die Solarzellenherstellung. Da die einzelnen Transportgüter locker aufliegen, können sie durch die Vibration des Transportsystems leicht aus der Bahn geraten oder ihre Orientierung verlieren. Liegen die Transportgüter nicht mehr genau in Reih und Glied, wird eine Aufnahme der Transportgüter für einen weiteren Verarbeitungsschritt oder eine Umlagerung erschwert und kann unter Umständen deshalb nicht maschinell erfolgen. Kollidieren die Transportgüter oder geraten sie auch nur in eine unbestimmte Position, so kann die Qualität der weiteren Verarbeitungsprbzesse beeinträchtigt werden, weil das Transportgut nicht mehr vollständig oder nicht an der richtigen Stelle angetroffen wird. Bei der Kollision mit einem feststehenden Bauteil besteht außerdem Bruchgefahr.

Ein weiteres Problem tritt auf, wenn das Transportgut in ein flüssiges Medium geführt werden soll. Sind die Güter nicht befestigt, können sie sich durch Auftrieb vom Transportsystem ablösen. Dieses Problem wird noch verstärkt, wenn eine nasschemische Reaktion erfolgt. Hierbei kann es zu Bläschenbildung und einem damit verbundenen Auftrieb kommen.

Dem Auftreiben des Transportguts in Flüssigkeiten kann mit einem Niederhalter entgegengewirkt werden. Dieser drückt das Transportgut auf das darunter liegende Transportsystem. In dem Fall ist jedoch das Transportgut dem Druck des Niederhalters ausgesetzt, was insbesondere beim Einführen in ein nasschemisches Becken und bei Dickeschwankungen des Transportguts Bruchgefahr bedeutet.

Außerdem weisen alle Transportsysteme Mängel bei der Anwendung von chemischen oder temperaturabhängigen Verfahren auf. Das Transportmedium, sei es Kette, Rolle, Walze oder Werkstückträger, sollte sich bei Temperaturerhöhung nur unwesentlich ausdehnen, damit der Gleichlauf und die Geradlinigkeit des Transports für die Werkstücke gesichert ist, gleichzeitig muss das Transportmedium aus einem Material gefertigt sein, das bei einer nasschemischen Verarbeitung selbst nicht angegriffen wird oder mitreagiert.

Eine mögliche Lösung dieses Problems wird in DE 30 35 117 A vorgestellt, in der eine zweiteilig aufgebaute Walze beschrieben wird. Die Achse aus einem sehr temperaturbeständigen Material, wie Glasoder Kohlefaser, ist von einem elastischen, chemisch beständigen Überzug umgeben. Dieser Überzug wird jedoch bei Temperaturschwankungen zumindest kleinere Ausdehnungsänderungen erfahren, was wiederum die Stabilität von Lage und Ausrichtung des Transportguts beeinträchtigt.

### Aufgabe der Erfindung

Die Aufgabe der Erfindung besteht darin, Niederhalter und ein Transportsystem vorzuschlagen, die eine Durchlaufverarbeitung von im wesentlichen flachen Werkstücken mit möglichst präziser Spurhaltung unter schonender Handhabung erlauben und welche die Werkstücke unter verschiedensten Bedingungen bezüglich der Temperatur, des Drucks und des umgebenden Mediums einer geringen mechanischen Belastung aussetzen. Außerdem soll das Transportsystem für beliebig breite Fertigungsstrassen geeignet sein.

### Lösung der Aufgabe

Die Aufgabe wird gelöst, indem ein im wesentlichen zylinderförmige Niederhalter eine mindestens zweiteilige Ausführung besitzt und aus einer Achse und mindestens einer Hülse besteht, wobei der Innendurchmesser der Hülse größer ist als der Außendurchmesser der Achse, die Achse und die Hülse des Niederhalters gekoppelt sind und an der Achse ein von der Achse wegweisender stiftartiger Mitnehmer angebracht ist, der in eine Aussparung auf mindestens einer Seite der Hülse eingreift.

Besonders vorteilhafte Lösungen bestehen in den Niederhaltern gemäß Ansprüche 2-5, den Transportsystemen gemäß Ansprüche 6 und 7 und ihren Verwendung gemäß Anspruch 8.

### Vorteile der Erfindung

Beim Transport von flachem Transportgut durch flüssige Substanzen ist es vorteilhaft, das Transportgut mit Niederhaltern gegen den Auftrieb zu schützen. Der Niederhalter ist erfindungsgemäß mindestens zweiteilig ausgebildet. Er besteht aus einer Achse und aus einer Hülse, deren Innendurchmesser größer als der Außendurchmesser der Achse ist. Dadurch besitzt die Hülse gegenüber der Achse ein Spiel, wobei die zentralen Achsen von Hülse und Achse nicht auf einer Linie liegen müssen.

Ein Niederhalter lässt sich daher so über einer Transportstrecke anbringen, dass die Hülse des Niederhalters nur mit ihrem Gewicht gegen das Transportgut drückt. Bei Dickenschwankungen des Transportguts im Rahmen des Spiels zwischen Hülse und Achse kann die Hülse ausweichen.

Das Spiel zwischen Achse und Hülse hat vor allem dann Vorteile, wenn unter dem Niederhalter Transportgüter verschiedener Dicken geführt werden sollen. Die Niederhalter müssen dann nicht extra neumontiert werden, sondern können für alle Transportgutdicken verwendet werden, die durch das Spiel von Hülse und Achse zugelassen sind. Die Variabilität der möglichen Werkstückdicke ist auch von Vorteil, wenn Schwankungen der Dicke innerhalb einer Serie auftreten, wenn also Transportgüter unterschiedlicher Dicken nacheinander oder nebeneinander unter dem Niederhalter hergeführt werden.

Die Elemente des Niederhalters lassen sich außerdem unabhängig und parallel fertigen, was zu einem Produktionsvorteil führt.

Die Erfindung sieht vor, dass Achse und Hülle gekoppelt sind. Dadurch wird bei einem Antrieb der Achse die Hülse mitgeführt. Bevorzugterweise ist die Kopplung nicht starr auszuführen, damit das Spiel zwischen Hülse und Achse erhalten bleibt.

Erfindungsgemäß ist für die Kopplung an der Achse ein von der Achse wegweisender, stiftartiger Mitnehmer angebracht, der in eine Aussparung auf mindestens einer Seite der Hülse eingreift. Der Stift verhindert, dass sich die Hülse von der Achse herunterbewegt und sich frei auf ihr drehen kann. Bei einem Antrieb der Achse wird die Hülse mitgeführt und so auch der Antrieb auf das Transportgut übertragen.

In einer vorteilhaften Ausführung besitzen die Niederhalter auf der Außenseite der Hülse fixierte Kontaktelemente, deren durch sie aufgespannter Durchmesser größer sind als der größte Durchmesser des Niederhalters. Dies hat eine geringst mögliche Kontaktfläche zwischen Niederhalter und Werkstück zur Folge. Dadurch wird, genau wie durch die punktförmige Auflage auf den Transportrollen, Raum für den Kontakt mit dem umgebenden Medium gelassen. Vorteilhafterweise werden als Kontaktelemente O-Ringe aus Fluorkautschuk benutzt.

In einer weiteren bevorzugten Ausführung der Erfindung sind die Niederhalter in beliebiger Länge zusammenfügbar. Dies führt zu den bereits genannten Fertigungs- und Lagervorteilen.

In einer vorteilhaften Weiterbildung sind die Niederhalter antreibbar, was dem Gleichlauf des Transportguts zuträglich ist..

In einer bevorzugten Ausführung ist die Aussparung der Hülse als Langloch ausgebildet, dessen Längserstreckung in Umfangsrichtung verläuft. Dadurch besitzt die Hülse einen größeren rotatorischen Freiheitsgrad verglichen mit einer Möglichkeit zur Verschiebung in Achsrichtung. Eine Verschiebung in Achsrichtung birgt die Gefahr der Spurvariation für das Transportgut. Die hier vorgestellte Aussparung erlaubt einerseits das oben beschriebene Spiel zwischen Hülse und Achse, verhindert andererseits das Verschieben der Hülse in Achsrichtung.

Die schonende Behandlung des Transportgutes wird gewährleistet, wenn ein Transportsystem mit erfindungsgemäßen Niederhaltern aufgebaut wird.

Eine besonders vorteilhafte Weiterführung eines Transportsystems besteht darin, das Transportgut zwischen Transportrollen und erfindungsgemäßen Niederhaltern herzuführen. Diese Kombination ist insbesondere dann von Vorteil, wenn das Transportgut durch verschiedene Medien geführt wird, wenn es an Duschen, Düsen, Luftschlitzen u.s.w. vorbeigeführt wird und wenn es zum Beispiel in ein Becken zur nasschemischen Bearbeitung getaucht werden soll. Dazu muss das Werkstück über eine schräge Transportrollenführung in das Becken abgesenkt werden. Die Niederhalter verhindern das auftriebsbedingte Abheben des Werkstücks. Transportrollen mit Auflageelementen sorgen dafür, dass das Werkstück auf der Schräge nicht abrutscht.

Da die Transportführung durch das erfindungsgemäße Transportsystem einen hohen Durchsatz ermöglicht, besteht eine besondere Eignung für den Transport von sehr empfindlichen Materalien.

Erfindungsgemäß wird deshalb die Verwendung eines Transportsystems als Fertigungsstraße bei der Herstellung von Solarzellen vorgeschlagen. Solche Zellen besitzen in der Regel eine Dicke von 100 bis 500 µm und bestehen zumeist aus mono- oder polykristallinem Silizium. Silizium ist ein spröder Werkstoff. Dadurch sind die Zellen sehr bruchempfindlich und stellen hohe Anforderungen an ein Transportsystem. Das erfindungsgemäße Transportsystem erlaubt ein sehr schonendes Handling der Scheiben bei hohem Durchsatz.

Neben dem einfachen Transport von Zellen ermöglicht das Transportsystem sowohl das Eintauchen der Zellen in ein nasschemisches Behandlungsbad als auch das Beaufschlagen beider Seiten der Zellen mit flüssigen oder gasförmigen Medien. Zu den Anwendungen gehören Reinigungs- und Ätzprozesse (z. B. Sägeschaden- und Phosphorglasätzen). Anschließend werden die Scheiben gespült und getrocknet.

Weitere Vorteile und Ausgestaltungen der Erfindung sind in den Unteransprüchen beschrieben und ergeben sich aus der Beschreibung und der beiliegenden Zeichnung.

### Zeichnungen

Es zeigen
- Fig. 1: einen Schnitt durch ein Spurelement;
- Fig. 2: einen Schnitt durch eine Achse eines Niederhalters;
- Fig. 3: einen Schnitt durch eine Hülse eines Niederhalters;
- Fig. 4: eine Seitenansicht auf den Niederhalter gemäß den Fig. 2 und 3;
- Fig. 5: einen Längsschnitt durch den Niederhalter gemäß Fig. 4;
- Fig. 6: einen Querschnitt durch den Niederhalter gemäß Fig. 4 entlang einer Linie VI-VI in Fig. 5;
- Fig. 7: eine Draufsicht auf benachbarte Transportrollen;
- Fig. 8: eine Seitenansicht auf einen Schnitt eines Transportsystems.

### Beschreibung eines Ausführungsbeispiel

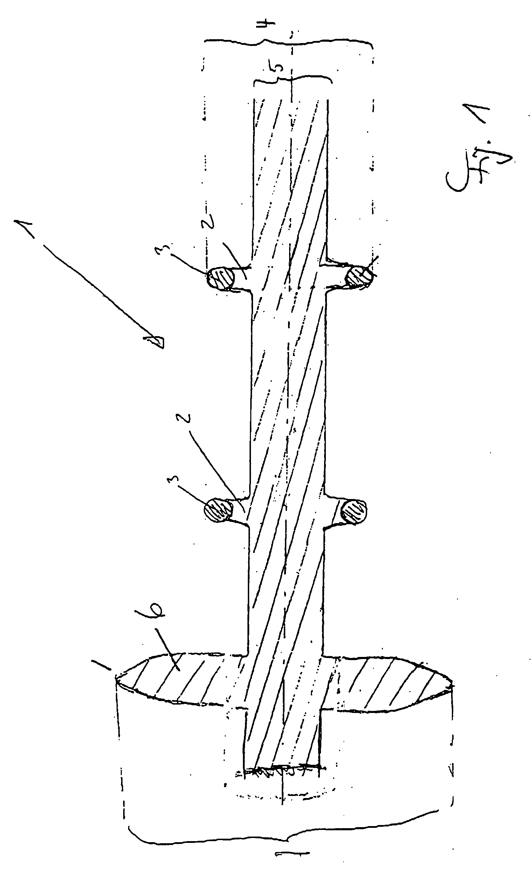

In einem Ausführungsbeispiel, wie es in Fig. 1 dargestellt ist, besitzt ein Spurelement 1 zwei von der Drehachse 5 wegweisende Nuten 2, auf denen Auflageelemente 3 liegen, zum Beispiel O-Ringe. Weil der Durchmesser der O-Ringe 4 größer als der Durchmesser der Drehachse 5 ist, findet nur eine punktförmige Berührung von Transportgut und Spurelement (jeweils in den Zeichnungen nicht dargestellt) statt. Sollte ein Werkstück seine ursprüngliche Lage oder Ausrichtung verlieren, so wird es durch die konische Formgebung des Spurhalters 6 wieder in die Spur zurückgeführt. Der Spurhalter 6 weist von der Drehachse 5 weg und weist einen Durchmesser 7 auf, der bezüglich des Spurelements 1 maximal ist.

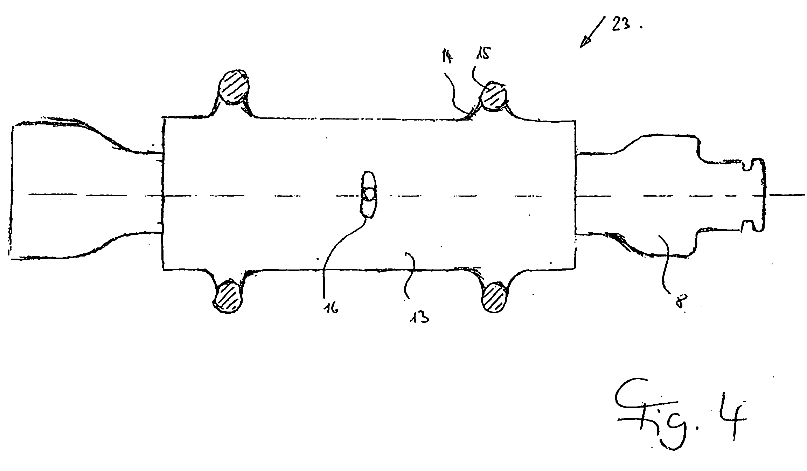

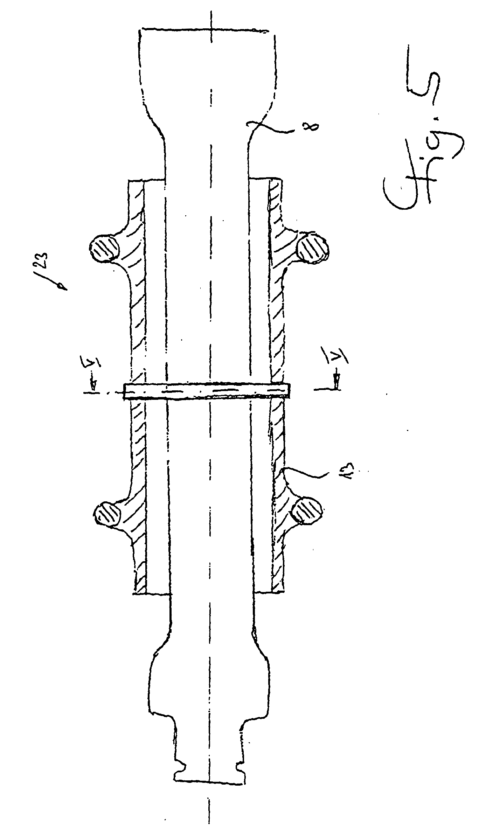

Bei einer schrägen Führung des Transportguts oder beim Eintauchen in ein chemisches Bad ist es günstig, wenn das Transportgut von Niederhaltern 23(Fig. 4-6) gehalten wird.

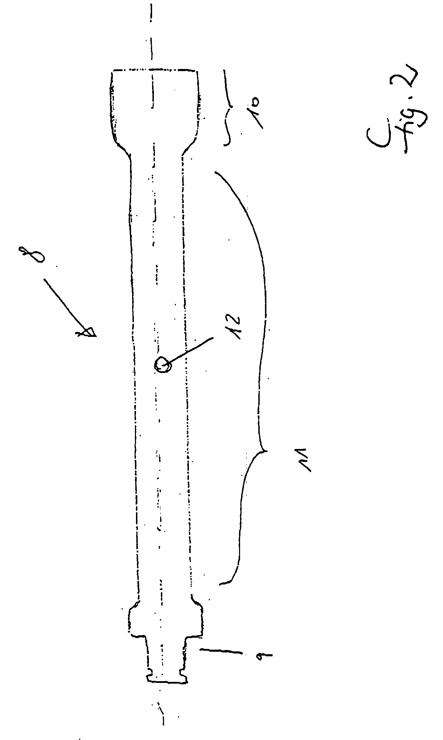

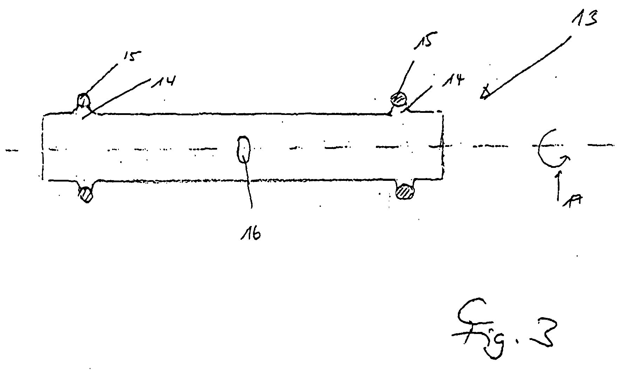

Diese sind bevorzugt zweiteilig aufgebaut. Fig. 2 zeigt einen Schnitt durch eine Achse 8 eines Teils eines Niederhalters 23.
Die Achse 8 ist mit dem Abschluss 9 versehen, der als Lauffläche bei Integration in ein Kugellager dient. In Aussparung 10 wird der Antrieb angekoppelt. Alternativ oder zusätzlich kann die Achse 8 mit einem Verschluss 9 versehen sein, mit der diese in eine auf der Gegenseite befindlichen Aussparung 10 einer weiteren Niederhalterachse (nicht näher dargestellt) steckbar und befestigbar ist. Die im wesentlichen zylinderförmige Achse 8 besitzt einen Bereich 11 mit reduziertem Durchmesser, der in montiertem Zustand von einer Hülse 13 (Fig. 3) umgeben wird. Im Zentrum des Bereichs 11 befindet sich eine Bohrung 12, in den ein stäbchenförmiger Mitnehmer eingeführt werden kann, der zur Kopplung von Achse 8 und Hülse dient.

In Fig. 3 ist eine Schnittansicht einer Hülse 13 gezeigt. Diese besitzt zwei von der Außenseite wegweisende Nuten 14 zur Auflage von Kontaktelementen 15, beispielsweise O-Ringen, und eine Aussparung 16 in Form eines Langlochs, dessen Längsrichtung in Umlaufrichtung 17 weist.

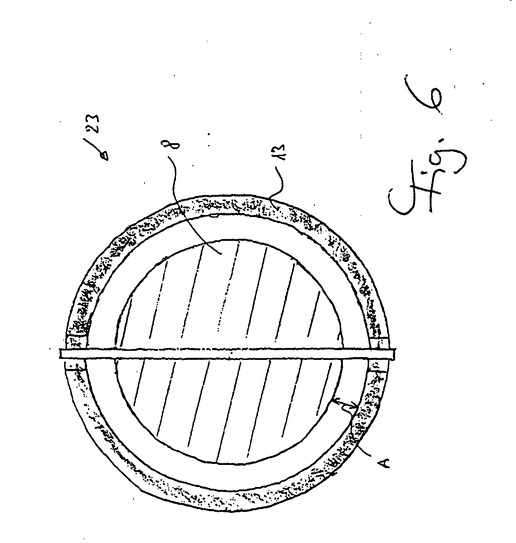

In Fig. 6 ist eine Schnittdarstellung durch einen Niederhalter 23 gemäß den vorhergehenden Zeichnungen dargestellt. Hierin ist erkennbar, dass zwischen der Achse 8 und der Hülse 13 ein Abstand A vorgesehen ist. Dieser Abstand A entspricht der halben Werkstücktoleranz. Dies bedeutet, dass auch dickere Werkstücke transportiert werden können, ohne dass es einer neuen Einstellung des Transportsystems bedarf. Die Achse 8 besitzt daher innerhalb der Hülse 13 ein Spiel derart, dass die Innenwandung der Hülse 13 an der Aussenwandung der Achse 8 anliegen kann. Der stäbchenförmige Mitnehmer bewirkt dabei, dass die auf die Achse 8 ausgeübte Rotation auf die Hülse übertragen wird. Durch die Schwerkraft und dem waagerechten Einbau des Niederhalters 23 in das Transportsystem wird bewirkt, dass die Hülse 13 bzw. die auf ihr angeordneten Kontaktelemente 15 ständig auf dem Werkstück (auch bei Rotation) anliegen.

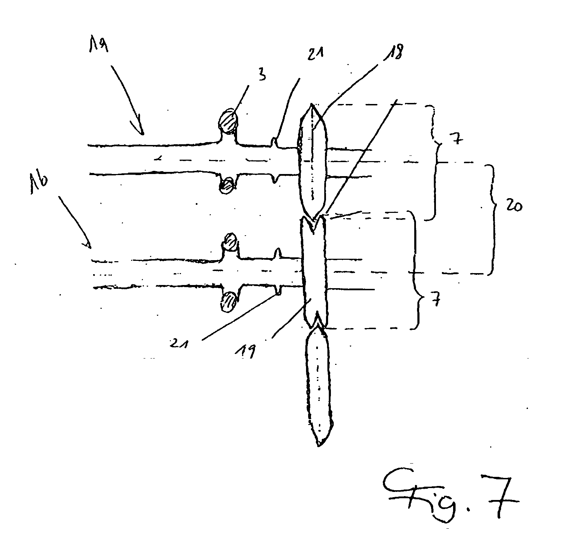

Fig.7 zeigt die Detailansicht eines Schnittes durch zwei benachbarte Spurelemente 1 verschiedenen Typs. Beide Spurelemente 1a, 1b besitzen Auflageelemente 3. Die Spurhalter sind jedoch unterschiedlich, denn von der Achse des einen Spurelements 1a weist ein Spurhalter 18 vom sogenannten männlichen Typ weg, während der benachbarte Spurhalter 1b einen sogenannten weiblichen Spurhalter 19 trägt, der eine Aussparung aufweist, durch welche der männliche Spurhalter 18 Platz findet. So können die Spurelemente 1a, 1b berührungsfrei drehen, und der Abstand 20 kann dennoch kleiner als der Durchmesser der Spurhalter 7.

Zwischen Auflageelement 3 und Spurhalter 18/19 befindet sich die Kompensationsfaltefalte 21. Bei einer temperaturbedingten Materialausdehnung wird die Längenänderung des Spurelements 1 bevorzugt an der Kompensationsfalte 21 ausgeglichen. Der Abstand der Spurhalter 18/19 und damit die Spurtreue des Transportgutes bleiben erhalten.

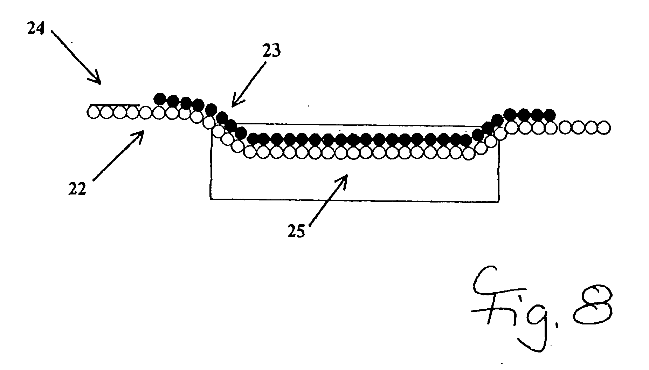

Fig. 8 zeigt einen seitlichen Schnitt durch ein Transportsystem mit Transportrollen 22 und Niederhaltern 23. Das Transportgut 24 liegt auf Transportrollen 22 auf. Beim Überhang in eine schräge Führung wird es von Niederhaltern 23 gegen die Transportrollen 22 gedrückt und dadurch in die Abwärtsrichtung gebracht. Beim Eintauchen in ein nasschemisches Bad 25 wirken die Niederhalter 23 einem auftriebsbedingten Abheben von den Transportrollen 22 entgegen.

### BEZUGSZEICHENLISTE

- 1: Spurelement A Abstand
- 2: Nut
- 3: Auflageelement
- 4: Durchmesser des Auflageelements
- 5: Durchmesser der Drehachse
- 6: Spurhalter
- 7: Durchmesser des Spurhalters
- 8: Niederhalterachse
- 9: Verschluss
- 10: Aussparung
- 11: Bereich für Hülse
- 12: Bohrung für Mitnehmer
- 13: Niederhalterhülse
- 14: Nut
- 15: Kontaktelement
- 16: Aussparung für Mitnehmer
- 17: Drehrichtung
- 18: männlicher Spurhalter
- 19: weiblicher Spurhalter
- 20: Abstand zweier benachbarter Spurelemente
- 21: Dehnfalte
- 22: Transportrolle
- 23: Niederhalter
- 24: Transportgut
- 25: nasschemisches Bad

## Patentansprüche

1. Niederhalter (23) zum Andrücken von im wesentlichen flachen Transportgut, wobei
- der im wesentlichen zylinderförmige Niederhalter (23) eine mindestens zweiteilige Ausführung besitzt,
- aus einer Achse (8) und mindestens einer Hülse (13) besteht und
- der Innendurchmesser der Hülse (13) größer ist als der Außendurchmesser der Achse (8) und
- die Achse (8) und die Hülse (13) des Niederhalters gekoppelt sind
**dadurch gekennzeichnet, dass**
- an der Achse (8) ein von der Achse (8) wegweisender stiftartiger Mitnehmer angebracht ist, der in eine Aussparung (16) auf mindestens einer Seite der Hülse (13) eingreift.

2. Niederhalter (23) gemäß Anspruch 1, **dadurch gekennzeichnet, dass** der Niederhalter (23) mindestens zwei in einem Abstand zueinander angeordnete und auf der Außenseite fixierte Kontaktelemente (15) aufweist, wobei der durch die Kontaktelemente (15) jeweils aufgespannte Durchmesser größer ist als der größte Durchmesser des Niederhalter (23).

3. Niederhalter (23) gemäß einem der vorherigen Ansprüche, **dadurch gekennzeichnet, dass** Niederhalter (23) in beliebiger Länge zusammen fügbar sind.

4. Niederhalter (23) gemäß einem der vorherigen Ansprüche, **dadurch gekennzeichnet dass** die Niederhalter (23) antreibbar sind.

5. Niederhalter (23) gemäß einem der vorherigen Ansprüche, **dadurch gekennzeichnet dass** die Aussparung (16) in der Hülse (13) als Langloch ausgebildet ist, dessen Längserstreckung in Umfangsrichtung (17) verläuft.

6. Transportsystem zum Transport von im wesentlichen flachem Transportgut mit Niederhalter gemäß Anspruch 1 zum Andrücken von im wesentlichen flachen Transportgut.

7. Transportsystem zum Transport von flachem Transportgut mit Transportrollen mit mindestens einem Spurelement (1) und mit Niederhalter (23) gemäß Anspruch 1, wobei das Spurelement (1) mindestens einen Spurhalter (6) aufweist, der einen Durchmesser (7) hat, welcher größer ist als der Durchmesser des Spurelements (1) im Bereich außerhalb des Spurhalters (6).

8. Verwendung eines Transportsystems gemäß einem der Ansprüche 6 oder 7 als Fertigungsstraße bei der Herstellung von Si-Wafern für die Halbleiter- und Solarindustrie, insbesondere für Ätz- und Reinigungsprozesse.

## Claims

1. Holding-down means (23) for exerting pressure on essentially flat articles, it being the case that
- the essentially cylindrical holding-down means (23) is of at least two-part configuration,
- comprises a spindle (8) and at least one sleeve (13), and
- the internal diameter of the sleeve (13) is greater than the external diameter of the spindle (8), and
- the spindle (8) and the sleeve (13) of the holding-down means are coupled,
**characterized in that**
- fitted on the spindle (8) is a pin-like carry-along element which is oriented away from the spindle (8) and engages in a cutout (16) on at least one side of the sleeve (13).

2. Holding-down means (23) according to Claim 1, **characterized in that** the holding-down means (23) has at least two spaced-apart contact elements (15) fixed on the outside, the diameter defined by the contact elements (15) in each case being larger than the largest diameter of the holding-down means (23).

3. Holding-down means (23) according to one of the preceding claims, **characterized in that** holding-down means (23) can be joined together to form any desired length.

4. Holding-down means (23) according to one of the preceding claims, **characterized in that** the holding-down means (23) can be driven.

5. Holding-down means (23) according to one of the preceding claims, **characterized in that** the cutout (16) in the sleeve (13) is designed as a slot with the longitudinal extent running in the circumferential direction (17).

6. Transporting system for transporting essentially flat articles, having holding-down means according to Claim 1 for exerting pressure on essentially flat articles.

7. Transporting system for transporting flat articles, having transporting rollers with at least one track element (1) and having a holding-down means (23) according to Claim 1, wherein the track element (1) has at least one track keeper (6), which has a diameter (7) which is larger than the diameter of the track element (1) in the region outside the track keeper (16).

8. Use of a transporting system according to one of Claims 6 and 7 as a production line in the production of silicon wafers for the semiconductor and solar industries, in particular for etching and cleaning processes.

## Revendications

1. Dispositif de maintien (23) pour presser des pièces à transporter essentiellement plates, dans lequel
- le dispositif de maintien essentiellement cylindrique (23) possède une réalisation au moins en deux parties,
- se compose d'un axe (8) et d'au moins une gaine (13) et
- le diamètre intérieur de la gaine (13) est supérieur au diamètre extérieur de l'axe (8) et
- l'axe (8) et la gaine (13) du dispositif de maintien sont accouplés
**caractérisé en ce que**
- l'on monte sur l'axe (8) un dispositif d'entraînement en forme de broche tourné à l'opposé de l'axe (8), lequel vient en prise dans un évidement (16) sur au moins un côté de la gaine (13).

2. Dispositif de maintien (23) selon la revendication 1, **caractérisé en ce que** le dispositif de maintien (23) présente au moins deux éléments de contact (15) disposés à distance l'un de l'autre et fixés sur le côté extérieur, le diamètre respectivement constitué par les éléments de contact (15) étant plus grand que le plus grand diamètre du dispositif de maintien (23).

3. Dispositif de maintien (23) selon l'une quelconque des revendications précédentes, **caractérisé en ce que** des dispositifs de maintien (23) peuvent être assemblés les uns aux autres en des longueurs quelconques.

4. Dispositif de maintien (23) selon l'une quelconque des revendications précédentes, **caractérisé en ce que** les dispositifs de maintien (23) peuvent être entraînés.

5. Dispositif de maintien (23) selon l'une quelconque des revendications précédentes, **caractérisé en ce que** l'évidement (16) dans la gaine (13) est réalisé sous forme de trou oblong, dont l'étendue longitudinale s'étend dans la direction périphérique (17).

6. Système de transport pour transporter des pièces à transporter essentiellement plates, comprenant un dispositif de maintien selon la revendication 1, pour presser des pièces à transporter essentiellement plates.

7. Système de transport pour transporter des pièces à transporter plates, comprenant des rouleaux de transport avec au moins un élément de trajectoire
(1) et avec un dispositif de maintien (23) selon la revendication 1, dans lequel l'élément de trajectoire (1) présente au moins un bras de retenue (6) qui présente un diamètre (7) qui est plus grand que le diamètre de l'élément de trajectoire (1) dans la région au-dessus du bras de retenue (6).

8. Utilisation d'un système de transport selon l'une quelconque des revendications 6 ou 7, en tant que chaîne de fabrication lors de la fabrication de galettes de Si pour l'industrie des semiconducteurs et l'industrie solaire, notamment pour les processus de gravure et de nettoyage.
